# EUROPEAN PATENT APPLICATION

(11) **EP 4 838 851 A1**
(43) Date of publication of application: **11.11.2026**
(21) Application number: 25865497.9
(22) Date of filing: 08.09.2025
(51) Int. Cl.: H04L 41/0677, H04L 43/0876, G06F 11/07

(54) **FAULT HANDLING METHOD FOR LARGE-MODEL CLUSTER TRAINING AND RELATED APPARATUS**

(30) Priority: 10.09.2024 CN 202411263017
(71) Applicant: Tencent Technology (Shenzhen) Company Limited, Shenzhen, Guangdong 518057 (CN)
(72) Inventor: CHEN, Zhaohe, Shenzhen, Guangdong 518057 (CN)
(74) Representative: EP&C
(86) International application number: PCT/CN2025/119614
(87) International publication number: WO 2026/056796

(57) **Abstract**

Embodiments of the present application disclose a fault handling method for large-model cluster training and a related apparatus. The method comprises: periodically collecting communication traffic of each node in a large-model cluster, and computing the total communication traffic corresponding to each traffic collection moment; when it is detected that a training interruption occurs to the large-model cluster, acquiring an interruption time period; on the basis of the total communication traffic corresponding to each traffic collection moment within the interruption time period, selecting one traffic collection moment from among the traffic collection moments within the interruption time period as a communication interruption moment; and on the basis of the communication traffic of each node at the communication interruption moment, determining a faulty node.

## Description

### RELATED APPLICATION

This application claims priority to Chinese Patent Application No. 202411263017.6, filed with the China National Intellectual Property Administration on September 10, 2024 and entitled "FAULT HANDLING METHOD BASED ON LARGE-MODEL CLUSTER TRAINING AND RELATED APPARATUS", which is incorporated herein by reference in its entirety.

### FIELD OF THE TECHNOLOGY

The present disclosure relates to the field of network communication technologies, and specifically, to a fault handling method for large-model cluster training and a related apparatus.

### BACKGROUND OF THE DISCLOSURE

In the field of artificial intelligence (AI) technologies, a large model is a deep learning model with large-scale parameters, and a parameter scale may generally reach millions or tens of millions, or even hundreds of millions. This type of model has a high expression capability and high prediction performance, and can process more complex tasks.

The large model has an extremely high requirement for computing resources and storage space, and a single computing node usually cannot satisfy the requirement. Therefore, cluster training becomes an effective solution, in which a training task is distributed to a plurality of computing nodes, to significantly improve training efficiency.

### SUMMARY

Embodiments of the present disclosure provide a fault processing method and apparatus for large-model cluster training, an electronic device, a computer-readable storage medium, and a computer program product. In some embodiments of the present disclosure, a faulty node in a large-model cluster can be quickly positioned after a training interruption occurs in large-model cluster training.

Some embodiments of the present disclosure provide a fault processing method for large-model cluster training, wherein the large-model cluster includes a plurality of nodes which perform a large-model training task collectively, the method including: periodically collecting communication traffic of each node in the large-model cluster at a plurality of traffic collection instants, and calculating, for each of the plurality of traffic collection instants, a total communication traffic across all nodes in the large-model cluster corresponding to the traffic collection instant; obtaining an interruption time period in response to detecting a training interruption in the large-model cluster, wherein the interruption time period is a preset duration covering an instant at which the training interruption is detected; and obtaining, from among the plurality of traffic collection instants, candidate traffic collection instants which are within the interruption time period; selecting, as a communication interruption instant, a traffic collection instant from among the candidate traffic collection instants based on the total communication traffic corresponding to each of the candidate traffic collection instants; and determining a faulty node based on the communication traffic of each node at the communication interruption instant.

Some embodiments of the present disclosure further provide a fault processing apparatus for large-model cluster training, wherein the large-model cluster includes a plurality of nodes which perform a large-model training task collectively, the apparatus including: a traffic collection module, configured to periodically collect communication traffic of each node in the large-model cluster at a plurality of traffic collection instants, and calculate, for each of the plurality of traffic collection instants, a total communication traffic across all nodes in the large-model cluster corresponding to the traffic collection instant; a training interruption module, configured to obtain an interruption time period in response to detecting a training interruption in the large-model cluster, wherein the interruption time period is a preset duration covering an instant at which the training interruption is detected; and obtain, from among the plurality of traffic collection instants, candidate traffic collection instants which are within the interruption time period; an instant determining module, configured to select, as a communication interruption instant, a traffic collection instant from among the candidate traffic collection instants based on the total communication traffic corresponding to each of the candidate traffic collection instants; and a node positioning module, configured to determine a faulty node based on the communication traffic of each node at the communication interruption instant.

Some embodiments of the present disclosure further provide an electronic device, including: one or more processors; and a memory, configured to store one or more computer programs, the one or more computer programs, when executed by the one or more processors, causing the electronic device to implement the fault processing method for large-model cluster training described above.

Some embodiments of the present disclosure further provide a computer-readable storage medium, having a computer program stored therein, the computer program, when executed by a processor of an electronic device, causing the electronic device to implement the fault processing method for large-model cluster training described above.

Some embodiments of the present disclosure further provide a computer program product, including a computer program, the computer program, when executed by a processor of an electronic device, implementing the fault processing method for large-model cluster training described above.

The foregoing general descriptions and the following detailed descriptions are merely exemplary and explanatory, and cannot limit the present disclosure.

### BRIEF DESCRIPTION OF THE DRAWINGS

FIG. 1 is a schematic diagram of an example of an implementation environment in the present disclosure.
FIG. 2 is a schematic architectural diagram of performing network state detection on a large-model cluster 110 in the implementation environment exemplified in FIG. 1.
FIG. 3 is a flowchart of a fault processing method for large-model cluster training according to an exemplary embodiment of the present disclosure.
FIG. 4 is a schematic diagram of an example of a traffic view of a large-model training task.
FIG. 5 is a flowchart of a fault processing method for large-model cluster training further provided based on the embodiment shown in FIG. 3.
FIG. 6 is a flowchart of a fault processing method for large-model cluster training according to another exemplary embodiment of the present disclosure.
FIG. 7 is a flowchart of another fault processing method for large-model cluster training provided based on the embodiment shown in FIG. 6.
FIG. 8 is a flowchart of still another fault processing method for large-model cluster training provided based on the embodiment shown in FIG. 6.
FIG. 9 is a block diagram of a fault processing apparatus for large-model cluster training according to an exemplary embodiment of the present disclosure.
FIG. 10 is a schematic structural diagram of a computer system applicable to implement an electronic device according to some embodiments of the present disclosure.

### DESCRIPTION OF EMBODIMENTS

Exemplary embodiments are described in detail herein, and examples of the exemplary embodiments are shown in the accompanying drawings. When the following descriptions involve the accompanying drawings, unless otherwise indicated, the same numerals in different accompanying drawings represent the same or similar elements. Implementations described in the following exemplary embodiments do not represent all implementations consistent with the present disclosure. Instead, the implementations are merely examples of apparatuses and methods that are described in detail in the appended claims and are consistent with some aspects of the present disclosure. In the following descriptions, related "some embodiments" describe a subset of all possible embodiments. However, it may be understood that the "some embodiments" may be the same subset or different subsets of all the possible embodiments, and may be combined with each other without conflict.

Block diagrams shown in the accompanying drawings are merely functional entities and do not necessarily correspond to physically independent entities. That is, the functional entities may be implemented in a software form, or in one or more hardware modules or integrated circuits, or in different networks and/or processor apparatuses and/or microcontroller apparatuses.

Flowcharts shown in the accompanying drawings are merely exemplary descriptions, do not necessarily include all content and operations/steps, and are not necessarily performed in the described sequences either. For example, some operations/steps may be further divided, while some operations/steps may be combined or partially combined. Therefore, an actual performing sequence may change based on an actual situation.

"A plurality of" mentioned in the present disclosure means two or more. "And/or" describes an association relationship between associated objects and represents that three relationships may exist. For example, A and/or B may represent the following three cases: only A exists, both A and B exist, and only B exists. The character "/" generally represents an "or" relationship between the associated objects.

The terms such as "first", "second", "third", and "fourth" in the specification, claims, and accompanying drawings of the present disclosure are configured for distinguishing between different objects, and are not configured for describing a specific sequence. The terms "include", "have", and any variant thereof are intended to cover a non-exclusive inclusion. For example, a process, method, system, product, or device that includes a series of steps or units is not limited to listed steps or units, but instead, in some embodiments, further includes an unlisted step or unit, or further includes another step or unit inherent to the process, method, product, or device.

In some embodiments of the present disclosure, the term "module" or "unit" refers to a computer program having a predetermined function or a part of a computer program, and works together with other related parts to achieve a predetermined objective, and may be completely or partially implemented by using software, hardware (for example, a processing circuit or a memory), or a combination thereof. Similarly, one processor (or a plurality of processors or memories) may be configured to implement one or more modules or units. In addition, each module or unit may be a part of an overall module or unit including a function of the module or the unit.

First, a large model is also referred to as a pre-training model (PTM) or a cornerstone model, and refers to a deep neural network (DNN) with a large quantity of parameters. The large model is trained on massive unmarked data, extracts a common feature from the data by using a function approximation capability of the DNN with a large quantity of parameters, and is applicable to downstream tasks by using technologies such as fine tuning, parameter efficient fine tuning (PEFT), and prompt-tuning. Therefore, the large model may achieve an ideal effect in a few-shot scenario or a zero-shot scenario.

Large models may be classified into language models (for example, embeddings from language models (ELMO), bidirectional encoder representations from transformers (BERT), and a generative pre-trained transformer (GPT)), visual models (for example, a swin-transformer, a vision transformer (ViT), and a vision mixture of experts (V-MOE)), speech models (for example, VALL-E), multi-modal models (for example, ViBERT, CLIP, Flamingo, and Gato), and the like based on processed data modalities. The multi-modal model is a model that establishes two or more data modal feature representations. The large model is an important tool for outputting artificial intelligence-generated content (AIGC), and may also be used as a general interface for connecting a plurality of specific task models.

The large model usually has the following features:

### 1. Distributed training

In the distributed training, a model training workload is divided and shared with a plurality of micro processors. The large model has a large quantity of parameters and large training data, which exceeds a processing capability of a single machine. Therefore, distributed parallel speed-up is needed. Parallel mechanisms may include data parallel (DP), model parallel (MP), pipeline parallel (PP), and hybrid parallel (HP). A structural design includes an architecture based on a parameter server, an architecture based on Reduce, an architecture based on a message passing interface (MPI), and the like.

### 2. Model compression and quantization

The model compression and quantization are to reduce a size of a model and accelerate model inference by using compression and quantization technologies, to reduce storage and computing costs of the model. The model compression usually includes pruning, low-rank decomposition, knowledge distillation, and the like. The model quantization refers to converting a floating-point number parameter in the model to a fixed-point number or integer parameter, to reduce the size of the model and accelerate model inference.

### 3. Adaptive computing

The adaptive computing refers to automatically adjusting a computing amount and precision of a model based on different input data, to improve computing efficiency of the model while maintaining model precision. The adaptive computing can flexibly adjust the computing amount and the precision of the model on different input data, to better balance the computing efficiency and the precision of the model.

### 4. Model parallel computing

The model parallel computing refers to allocating a computing task of a model to a plurality of computing devices (for example, a central processing unit (CPU), a graphics processing unit (GPU), and a tensor processing unit (TPU)) for simultaneous computing, to accelerate training and inference of the model. The model parallel computing can effectively use computing resources, and improve computing efficiency and a training speed of the model.

The large model has an extremely high requirement for computing resources and storage space, and a single computing node usually cannot satisfy the requirement. Therefore, cluster training becomes an effective solution, in which a training task is distributed to a plurality of computing nodes, to significantly improve training efficiency. A network cluster used for large-model training usually has a large networking scale and a large quantity of devices and communication links. Consequently, fault frequency is high, and further, a large-model training task cannot stably run for a long time.

In some implementations, when an interruption occurs in the large-model training task, the following processing procedure is usually executed.
1. Collect a node log: An operation and maintenance person may log in to each node device, and collect a related log file. This process is very time-consuming due to a large quantity of nodes included in a large-model cluster.
2. Analyze alarm information: The alarm information usually includes key information of a running state of a device. However, because the alarm information may come from different systems and devices, manual comparison and analysis are needed to determine some devices or systems that generate a fault.
3. Compare the nodes one by one: To further position a network or device problem, the operation and maintenance person may need to compare logs and performance indicators of a plurality of node devices. In this process, a script may be drafted for careful comparison and analysis, to find out a faulty device at source.
4. Position the fault: After determining a possible faulty device, the operation and maintenance person may further perform analysis, to determine a specific cause of the problem. This process may involve a plurality of aspects such as code examination and hardware detection.

In view of this, some embodiments of a current fault positioning technology at least have disadvantages such as high time consumption, high labor costs, and a high error risk. Based on the foregoing disadvantages, it usually takes more than one day to resume from one ordinary training interruption. During the resumption, computing resources of nodes are in a waiting state, causing a large quantity of computing resources to be lost. Such a computing power loss affects a current large-model training task, and may also affect other services that depend on these resources.

To resolve the foregoing technical problem, embodiments of the present disclosure provide a fault processing method for large-model cluster training, a fault processing apparatus for large-model cluster training, an electronic device, a computer-readable storage medium, and a computer program product. Some embodiments are described in detail below.

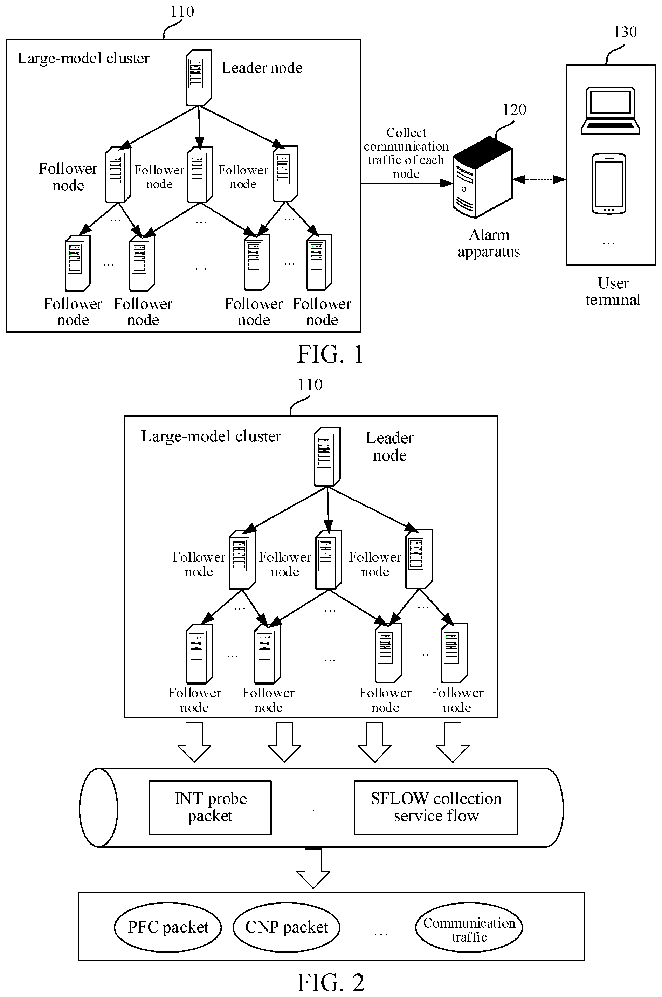

First, FIG. 1 is a schematic diagram of an example of an implementation environment in the present disclosure. The implementation environment is a large-model training system, including a large-model cluster 110, an alarm apparatus 120, and a user terminal 130.

The large-model cluster 110 includes a plurality of nodes, and each node may be a device having a graphics processing unit (GPU), such as a terminal or a server. This is not limited herein. A large-model training task is distributed to the plurality of nodes, to perform high-efficiency large-model training.

The nodes in the large-model cluster 110 may be classified into a leader node and a follower node. The leader node may be responsible for coordinating a training task in the entire cluster, which may include, for example, allocating the training task to each follower node, managing distribution and synchronization of training data, detecting a state of each follower node, collecting and summarizing a local gradient calculated by each follower node and updating a global parameter, distributing an updated parameter to each follower node. The follower node may be responsible for executing the training task allocated by the leader node, for example, calculating the local gradient, transmitting the local gradient to the leader node for summarization, and receiving the updated parameter from the leader node.

Because a large model has an extremely high requirement for computing resources and storage space, the large-model cluster 110 usually has a large networking scale and a large quantity of nodes and communication links. Consequently, fault frequency is high, and further, the large-model training task cannot stably run for a long time. Therefore, the alarm apparatus 120 is configured to: during the large-model training of the large-model cluster 110, periodically collect communication traffic of each node in the large-model cluster, and perform traffic statistics, to obtain total communication traffic corresponding to each traffic collection instant; obtain a corresponding interruption time period when it is detected that a training interruption occurs in the large-model training; select a traffic collection instant from traffic collection instants within the interruption time period as a communication interruption instant based on total communication traffic corresponding to each traffic collection instant within the interruption time period; and then determine a faulty node based on communication traffic of each node at the communication interruption instant. In this way, the faulty node of the large-model cluster 110 is quickly and accurately positioned.

After determining the faulty node, the alarm apparatus 120 may transmit information related to the faulty node to the user terminal 130, so that an operation and maintenance person may learn of the information related to the faulty node through the user terminal 130, thereby triggering corresponding fault processing on the faulty node. For example, the faulty node may be removed from the large-model cluster 110, and another node device is newly added to the large-model cluster 110, to resume the large-model training.

The alarm apparatus 120 may further have an alarm prompt function. For example, the alarm apparatus 120 may be provided with an alarm prompt component such as a display panel or a screen, or a speech module. Therefore, after the faulty node is determined, the alarm apparatus 120 may prompt, through the provided alarm prompt component, the operation and maintenance person to perform corresponding fault processing on a specific faulty node.

The alarm apparatus 120 may be a terminal such as a computer, a smartphone, a tablet computer, or a notebook computer, may be an independent physical server, or may be a server cluster or a distributed system including a plurality of physical servers. This is not limited in the present disclosure. The user terminal 130 may be a terminal such as a computer, a smartphone, a tablet computer, or a notebook computer. This is not limited in the present disclosure either.

Further, FIG. 2 is a schematic architectural diagram of performing network state detection on the large-model cluster 110 in the implementation environment exemplified in FIG. 1. FIG. 2 specifically shows that network state detection may be performed on each node in the large-model cluster 110 by using an in-band network telemetry (INT) probe packet, a solution for network monitoring (SFLOW) collection service flow, and the like.

INT is a technology for collecting a network state by using a data plane service. Telemetry information is carried and transmitted by using service traffic of a data plane, without relying on a control plane. INT instructions are embedded in a data packet. The instructions are interpreted by a forwarding device and related information is filled in, and then level-by-level reporting is performed, to implement real-time monitoring of the network state and remote reporting of data. As shown in FIG. 2, network state data such as a priority flow control (PFC) packet and a congestion notification packet (CNP) packet of each node in the large-model cluster 110 may be obtained by using the INT probe packet.

SFLOW is a network traffic detection technology based on packet sampling and may be configured for statistical analysis of network traffic. An SFLOW agent is embedded in an application-specific integrated circuit (ASIC) chip of a detected network device, supports flow-based data packet statistical sampling and time-based network interface statistical sampling, and forwards a sampled data packet to a specified SFLOW traffic sampler for analysis. For example, for the implementation environment shown in FIG. 1, an SFLOW agent program may be deployed in each node, to sample a data packet of each node, and an SFLOW traffic sampler program is deployed in the alarm apparatus 120, so that the alarm apparatus 120 collects the communication traffic of each node in the large-model cluster 110.

An SFLOW technology may support collecting and reporting five-tuple traffic information. The five-tuple traffic information refers to five key elements in network communication, including a source Internet protocol (IP) address, a source port number, a destination IP address, a destination port number, and a transport layer protocol. A specific communication flow in a network is defined by jointly using the five elements. In this way, the communication traffic of each node in the large-model cluster 110 can be obtained by using the SFLOW collection service flow.

In an actual application scenario, the network state of the large-model cluster 110 may be detected by selecting a suitable detection technology based on an actual application requirement, or by using a combination of a plurality of technologies, to implement more comprehensive network detection. This is not limited in the present disclosure.

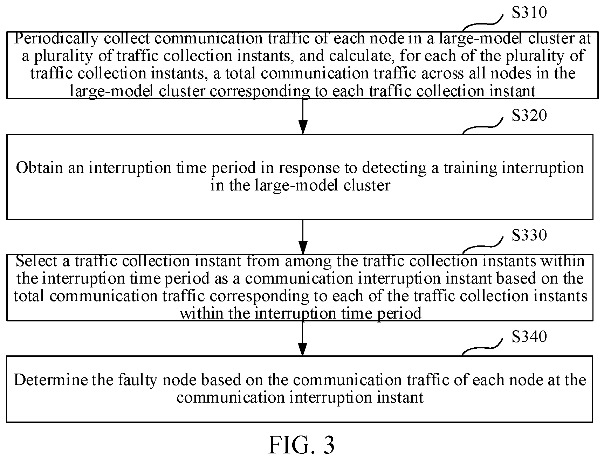

FIG. 3 is a flowchart of a fault processing method for large-model cluster training according to an exemplary embodiment of the present disclosure. The method may be applied to the implementation environment shown in FIG. 1. For example, the method may be specifically performed by the alarm apparatus 120, or may be jointly performed by the alarm apparatus 120 and the large-model cluster 110. Certainly, the method may alternatively be applied to another implementation environment, and is performed by a terminal or a server in the another implementation environment, or jointly performed by the terminal and the server in the another implementation environment. This is not limited in the present disclosure.

As shown in FIG. 3, the fault processing method for large-model cluster training includes S310 to S340, which are described in detail below.

S310: Periodically collect communication traffic of each node in a large-model cluster at a plurality of traffic collection instants, and calculate, for each of the plurality of traffic collection instants, a total communication traffic across all nodes in the large-model cluster corresponding to each traffic collection instant.

In the present disclosure, the communication traffic is remote direct memory access (RDMA) traffic between nodes in the large-model cluster. During large-model cluster training, the nodes in the large-model cluster communicate by using an RDMA communication technology, so that data may be directly transmitted between memory space of different nodes, thereby generating the RDMA traffic. RDMA traffic of one node in the large-model cluster includes: traffic generated when the node directly accesses a memory of another node in the large-model cluster, and traffic generated when another node directly accesses a memory of the node.

The traffic collection instant is a moment at which the communication traffic of each node is actually collected. Total communication traffic corresponding to a traffic collection instant is a sum of communication traffic of all the nodes in the large-model cluster at the traffic collection instant.

The communication traffic of each node in the large-model cluster may be periodically collected by using the SFLOW collection service flow shown in FIG. 2 or in another manner. This is not limited in the present disclosure.

For example, a data transmission packet may be reported through a switch at a preset sampling ratio, for example, a sampling ratio of 64K:1 or another sampling ratio. In this way, the communication traffic may be calculated based on a reported sampling packet and the sampling ratio. The sampling ratio of 64K:1 means that one packet is sampled for reporting for every 64000 data transmission packets. In some embodiments, the communication traffic of each node may be reported at a preset interval. This is not limited in the present disclosure.

S320: Obtain an interruption time period in response to detecting a training interruption in the large-model cluster.

In some embodiments, the interruption time period is a preset duration covering an instant at which the training interruption is detected. Candidate traffic collection instants which are within the interruption time period may be obtained from among the plurality of traffic collection instants. Thus, in the following steps, a communication interruption instant may be selected from among the candidate traffic collection instants. A traffic view of a large-model training task may be detected, to determine whether the training interruption occurs in the large-model cluster.

The traffic view is configured for presenting and analyzing a communication traffic change of the large-model training task.

During the large-model training, a checkpoint (configured for saving a current state of a model, such as a model parameter and an optimizer state) operation is performed, causing the communication traffic to decrease at a specific time interval. This decrease in communication traffic is considered as a normal situation. If a decrease in communication traffic other than the normal situation is detected, it indicates that the training interruption is detected. In some embodiments, an abnormal decrease in communication traffic of the large-model training task may be caused by the training interruption. If an abnormal decrease in communication traffic is detected, it indicates that the training interruption is detected. During the large-model training, the decrease in the communication traffic caused by performing the checkpoint operation is slow. Therefore, if it is detected that communication traffic of the large-model training task at an instant decreases to below a preset proportion of standard traffic, for example, decreases to below 80% of the standard traffic, it may be determined that the decrease in the communication traffic is not caused by performing the checkpoint operation. Therefore, it is determined that the abnormal decrease in the communication traffic occurs, so that it is detected that the large-model training is interrupted. The standard traffic is a preset traffic threshold, for example, 200000 Gbps.

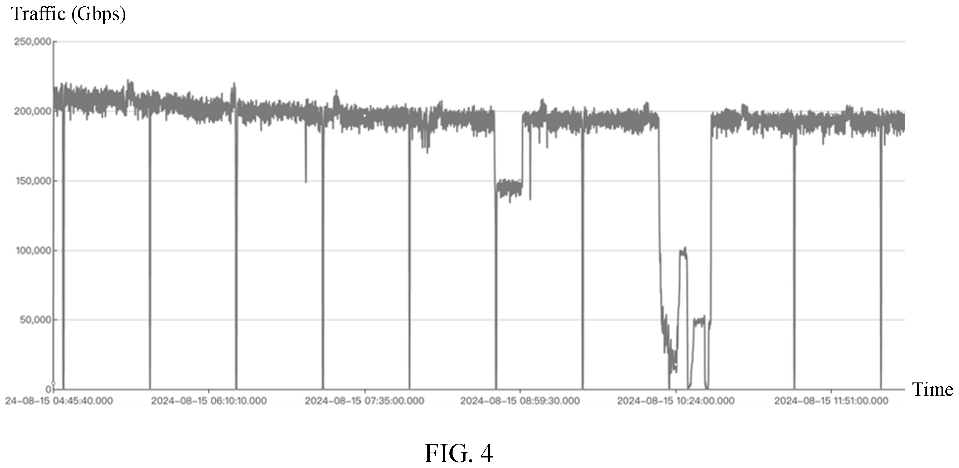

FIG. 4 is a schematic diagram of an example of the traffic view of the large-model training task. As shown in FIG. 4, the communication traffic of the large-model training task changes with time. Within 08: 46 to 09: 00 and 10: 15 to 10: 40, the communication traffic of the large-model training task decreases to below 80% of the standard traffic of 200000 Gbps, which is considered as an abnormal decrease in communication traffic. Therefore, it is detected, at an instant when the communication traffic abnormally decreases, that the training interruption occurs in the large-model training cluster. Communication traffic of the large-model training task at each instant is represented by a sum of communication traffic of all the nodes in the large-model cluster at the instant.

The interruption time period represents a time period corresponding to the training interruption of the large-model cluster. For example, after an instant at which the training interruption occurs in the large-model cluster is detected, a time period of a preset length before and after the instant is obtained as the interruption time period. For example, if the instant at which the training interruption occurs in the large-model cluster is represented as T, and the preset length is 10 minutes (min), a time period from T-10 min to T+10 min may be used as the interruption time period. The instant T at which the training interruption occurs in the large-model cluster may also be referred to as the instant at which the communication traffic abnormally decreases.

S330: Select a traffic collection instant from among the traffic collection instants within the interruption time period as a communication interruption instant based on the total communication traffic corresponding to each of the traffic collection instants within the interruption time period.

In consideration of a communication propagation chain of the large-model cluster training, all nodes participating in the training essentially form a communication graph. If a faulty node occurs, other nodes communicating with the faulty node may have a communication abnormality. The communication abnormality is manifested as an abnormal decrease in overall traffic of the large-model training task. Therefore, an instant at which the abnormal decrease in the overall traffic occurs in the large-model training task may be determined based on the total communication traffic corresponding to each traffic collection instant within the interruption time period, and the instant is used as the communication interruption instant.

In the present disclosure, an instant at which it is detected that the training interruption occurs in the large-model cluster is not directly used as the communication interruption instant, but a traffic collection instant is selected from the traffic collection instants within the interruption time period as the communication interruption instant based on the total communication traffic corresponding to each traffic collection instant within the interruption time period. The consideration arises from a possibility that the instant at which it is detected that the training interruption occurs in the large-model cluster may not be a real communication interruption instant due to a realistic factor such as a network delay or a setting of some service functions. Therefore, after it is detected that the training interruption occurs in the large-model cluster, the interruption time period is obtained, and a traffic collection instant is selected from the traffic collection instants within the interruption time period as the communication interruption instant based on the total communication traffic corresponding to each traffic collection instant within the interruption time period, so that accuracy of the communication interruption instant can be improved, thereby improving accuracy of positioning the faulty node.

S340: Determine the faulty node based on the communication traffic of each node at the communication interruption instant.

Considering that the faulty node is a root cause node causing an interruption of the large-model training, at the communication interruption instant, the faulty node is to be a first node whose communication is obstructed, and a phenomenon of a traffic decrease of the faulty node is evident. Therefore, a node having lowest communication traffic at the communication interruption instant may be determined, and the node having the lowest communication traffic is determined as the faulty node.

In the technical solutions provided in the present disclosure, when it is detected that the large-model training is interrupted, the faulty node in the large-model cluster is automatically analyzed based on the collected communication traffic, so that the faulty node in the large-model cluster can be positioned more efficiently, thereby reducing a waste of computing resources caused by the interruption of the large-model training. In addition, when it is detected that the large-model training is interrupted, a traffic collection instant is first selected from the traffic collection instants within the interruption time period as the communication interruption instant based on the total communication traffic corresponding to each traffic collection instant within the interruption time period, and then the faulty node is determined based on the communication traffic of each node at the communication interruption instant, to accurately position the root cause node causing the interruption of the large-model training. To some extent, this also shortens duration needed for resumption of the large-model training, to further reduce the waste of computing resources caused by the interruption of the large-model training.

After the faulty node is determined, whether the faulty node is caused by a network fault or a device fault may be further determined based on network state information corresponding to the faulty node. If a network is faulty, the large-model training may be continued after the network is restored. If a device is faulty, the device may be replaced with a new node device. For example, the network state information of the faulty node may be obtained by using the INT probe packet shown in FIG. 2, or in another manner. This is not limited herein. The network state information of the faulty node may include a GPU utilization rate, a PFC packet, an explicit congestion notification (ECN) packet, and the like, and is not limited herein.

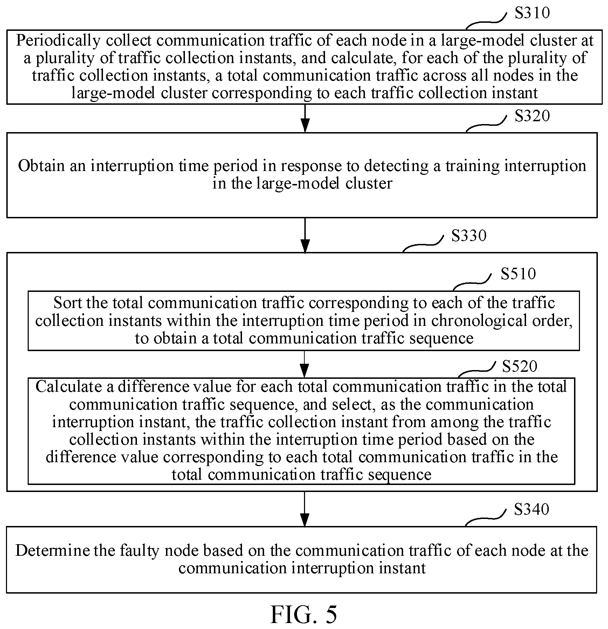

FIG. 5 is a flowchart of a fault processing method for large-model cluster training further provided based on the embodiment shown in FIG. 3.

As shown in FIG. 5, the process of selecting the traffic collection instant from the traffic collection instants within the interruption time period as the communication interruption instant based on the total communication traffic corresponding to each traffic collection instant within the interruption time period in S330 includes S510 and S520, which are described in detail below.

S510: Sort the total communication traffic corresponding to each of the traffic collection instants within the interruption time period in chronological order, to obtain a total communication traffic sequence.

As described above, in the large-model cluster, all the nodes participating in the training essentially form a communication graph. If a faulty node occurs, other nodes communicating with the faulty node may have a communication abnormality. Based on this, to exclude impact of another node whose traffic decreases, a difference value is used to smooth out a larger traffic decrease amplitude of another node, so as to accurately position the faulty node.

For ease of understanding a principle of smoothing out the larger traffic decrease amplitude of the another node by using the difference value, for example, it is assumed that communication traffic of the faulty node (that is, a root cause node) decreases from 100 Gbps at a t-1 instant to 20 Gbps at a t instant, a traffic decrease amplitude is 80%, and a difference value is (20-100)/1s=-80, while communication traffic of another node decreases from 60 Gbps at the t-1 instant to 5 Gbps at the t instant, a traffic decrease amplitude is 91.7%, and a difference value is (5-60)/1s=-55. The traffic decrease amplitude of the another node is clearly greater than the traffic decrease amplitude of the faulty node, but the difference value of the another node is less than the difference value of the faulty node. It can be learned that the larger traffic decrease amplitude of the another node can be smoothed out by using the difference value, to accurately position the faulty node.

Difference calculation is a method of calculating a difference between values of a sequence at different points, and a result of the difference calculation reflects a change of discrete values. In this way, the total communication traffic corresponding to each traffic collection instant within the interruption time period may be sorted in chronological order, to obtain the total communication traffic sequence. Subsequently, difference calculation is performed on the total communication traffic sequence, to select a traffic collection instant from the traffic collection instants within the interruption time period as the communication interruption instant based on a result of the difference calculation.

S520: Calculate a difference value for each total communication traffic in the total communication traffic sequence, and select, as the communication interruption instant, the traffic collection instant from among the traffic collection instants within the interruption time period based on the difference value corresponding to each total communication traffic in the total communication traffic sequence.

The difference calculation may be classified into three types: forward difference calculation, backward difference calculation, and central difference calculation. The forward difference calculation refers to subtracting a value of a point from a value after the point in a sequence, and an obtained result is a forward difference value of the point. The backward difference calculation refers to subtracting a value of a point from a value before the point, and an obtained result is a backward difference value of the point. The central difference calculation refers to using a difference between an average value of two points before and after a point in a sequence and a value of the point as a central difference value of the point.

Because fault positioning focuses on an abnormal decrease in traffic, it is more appropriate to determine the communication interruption instant by using a forward difference value. For example, a forward difference value of each total communication traffic in the total communication traffic sequence is calculated, to construct a forward difference sequence corresponding to the total communication traffic sequence based on the forward difference value corresponding to each total communication traffic, and then the forward difference sequence is traversed to obtain a smallest forward difference value, so as to determine a traffic collection instant corresponding to the smallest forward difference value as the communication interruption instant.

For example, the total communication traffic sequence is represented as S1: {(<1864/>,*traffic*₁), (*t*₂, *traffic*₂), ..., (*tₙ*, *trafficₙ*)}, and the forward difference value is represented as ∇*trafficᵢ* = *traffic*_{*i*+1} - *trafficᵢ*, where 1 ≤ *i* ≤ *n*. The forward difference value at each instant in the total communication traffic sequence S1 is calculated, to obtain a forward difference sequence S2: {(*t*₁, ∇*traffic*₁), (*t*₂, ∇*traffic*₂), ..., (*t*_{*n-*1}, ∇*traffic*_{*n*-1})}, so that the forward differential sequence S2 may be traversed to obtain a smallest forward differential value min(∇r*afficᵢ*), so as to use a traffic collection instant corresponding to the smallest forward difference value min(∇r*afficᵢ*) as the communication interruption instant.

If the communication interruption instant is represented as *tᵢ*, and a traffic sequence of each node in the large-model cluster at a *tᵢ* instant is represented as S3: {(*tᵢ*,*N*₁ ,*traffic*₁), (*tᵢ*, *N*₂, *traffic*₂) ..., (*tₙ*, *Nₙ*, *trafficₙ*)}, where *Nᵢ* represents a training node *i*, the traffic sequence S3 may be traversed to obtain a node corresponding to a smallest traffic value, and the node is the faulty node.

In the present disclosure, the communication interruption instant may be accurately determined based on the forward difference value. Specifically, the traffic collection instant corresponding to the smallest difference value is determined as the communication interruption instant, and then, the node having the lowest communication traffic at the communication interruption instant is determined as the faulty node. In other words, the faulty node is a node having lowest traffic at the communication interruption instant with the smallest difference value. Because the communication interruption instant is determined based on the forward difference value, the node having the lowest traffic at the communication interruption instant is also a node having a largest traffic decrease amplitude. Therefore, the determined faulty node is also equivalent to being determined based on the forward difference value, so that accuracy can be ensured.

In the present disclosure, the communication interruption instant may alternatively be determined through the backward difference calculation or the central difference calculation, but some improvement processing may be performed. For example, when the communication interruption instant is determined by using a backward difference value, a constructed backward difference sequence may be traversed to obtain a largest backward difference value, and a next traffic collection instant of a traffic collection instant corresponding to the largest backward difference value obtained through traversal is determined as the communication interruption instant. For another example, when the communication interruption instant is determined by using a central difference value, a constructed central difference sequence may be traversed to obtain a largest central difference value, and a next traffic collection instant of a traffic collection instant corresponding to the largest central difference value obtained through traversal is determined as the communication interruption instant. In some embodiments, an improved central difference sequence may be constructed. In an improved central difference sequence, a difference value corresponding to each traffic collection instant is a difference between an average value of a later traffic collection instant and an earlier traffic collection instant in the total communication traffic sequence and a value of a current traffic collection instant. The improved central difference sequence is traversed to obtain a smallest difference value, and a next traffic collection instant of a traffic collection instant corresponding to a largest central difference value obtained through traversal is determined as the communication interruption instant.

Regardless of a used difference value solution, the larger traffic decrease amplitude of the another node can be smoothed out by the difference value, so that the faulty node can be accurately positioned. However, the difference value solutions shown in the foregoing examples all use first-order difference values. In some embodiments, a multi-order difference solution such as a second-order difference solution may be used to position the faulty node. This is not limited in the present disclosure.

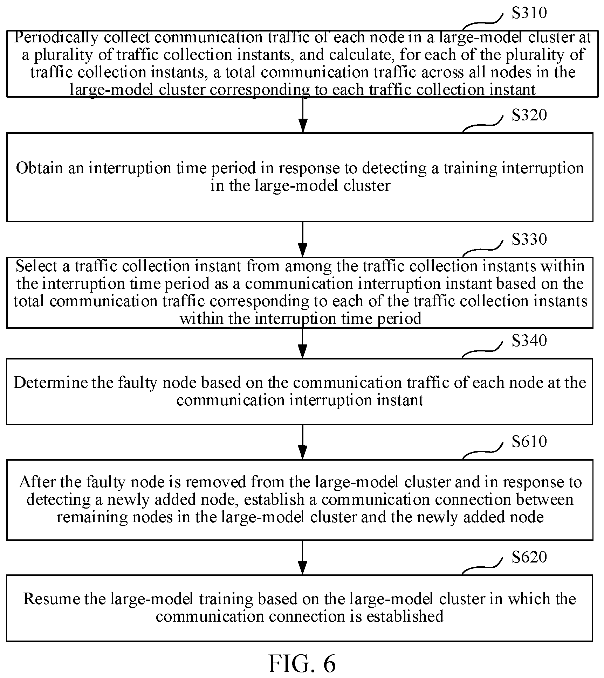

FIG. 6 is a flowchart of a fault processing method for large-model cluster training according to another exemplary embodiment of the present disclosure. As shown in FIG. 6, based on the embodiment shown in FIG. 3, the method further includes S610 and S620, which are described in detail below.

S610: After the faulty node is removed from the large-model cluster and in response to detecting a newly added node, establish a communication connection between remaining nodes in the large-model cluster and the newly added node.

After the faulty node is determined, the large-model cluster training is further rapidly resumed in combination with a service side. For example, the faulty node may be removed from the large-model cluster, and a node is newly added to the large-model cluster. The large-model training is resumed by replacing the faulty node with the newly added node. For example, after receiving prompt information about the faulty node, an operation and maintenance person manually removes the faulty node from the large-model cluster, and adds another new device to the large-model cluster.

When the newly added node is detected, the communication connection between the remaining nodes in the large-model cluster obtained after the faulty node is removed and the newly added node may be established, and the large-model training is resumed based on a large-model cluster whose communication connection is established.

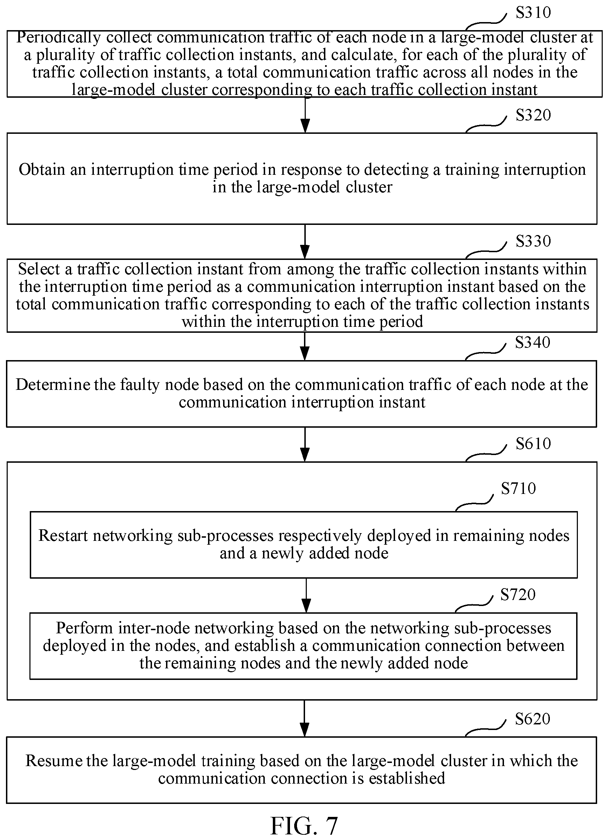

For example, as shown in FIG. 7, the process of establishing the communication connection between the remaining nodes in the large-model cluster and the newly added node may include the following operations.

S710: Restart networking sub-processes respectively deployed in the remaining nodes and the newly added node.

S720: Perform inter-node networking based on the networking sub-processes deployed in the nodes, and establish the communication connection between the remaining nodes and the newly added node.

The networking sub-processes are deployed in all node devices that may be configured to construct the large-model cluster, and automatic inter-node networking is implemented by using the networking sub-processes, to establish cluster communication of the large-model cluster.

In this way, the networking sub-processes respectively deployed in the remaining nodes and the newly added node are restarted, and inter-node networking is automatically performed based on the restarting of the networking sub-processes respectively deployed in the remaining nodes and the newly added node, to establish the communication connection between the remaining nodes and the newly added node.

For example, the process of performing inter-node networking by using the networking sub-processes may include the following operations.

S721: Obtain host group information from a shared storage server, the host group information being configured to record host information of each node currently included in the large-model cluster.

S722: Save host information of a local node to the shared storage server, to update the host group information.

S723: Continuously query the host group information in the shared storage server, and in response to an amount of host information included in the host group information reaching a preset amount value and the amount of host information not changing within a preset duration, perform networking configuration on the local node and establish an inter-node communication connection based on the networking configuration.

The shared storage server is configured to provide shared storage space, the shared storage space is configured for storing the host group information, and the host group information is configured for recording host information of all nodes currently included in the large-model cluster. The networking sub-process obtains the currently recorded host group information from the shared storage server, and then saves the host information of the local node to the shared storage server. In other words, the networking sub-process adds a node of the networking sub-process to a host group, and synchronizes the host information to the host group information recorded in the shared storage server. The networking sub-process continuously queries the host group information in the shared storage server, and when the amount of host information included in the found host group information reaches the preset amount value, and the amount of host information included in the found host group information does not change within the preset duration, it indicates that all the nodes are ready for networking. Therefore, the networking configuration is performed on the local node, to establish the inter-node communication connection based on the networking configuration.

The networking configuration is performed on the local node by the networking sub-process, and may include, for example, configuration of information such as a local rank, a global rank, and a world size. Therefore, cluster communication networking is automatically performed based on the configured information, to complete subsequent training of the large-model cluster.

The local rank refers to rankings or identifiers of a plurality of computing units (for example, GPUs) on a single node, and is configured for parallel computing and a communication operation inside the node. For example, in each computing unit, based on a local rank value, a role and a task inside the node may be determined, and communication and data exchange may be performed with another computing unit.

The global rank refers to rankings or identifiers of nodes in a large-model cluster.

The world size refers to a quantity of nodes in a large-model cluster, that is, a quantity of nodes participating in large-model training. The world size may be configured for ensuring that all the nodes in the large-model cluster can participate in a large-model training process, and helping appropriately divide a large-model training task to different nodes, to implement operations such as data distribution, parameter synchronization, and gradient aggregation.

In this way, the networking sub-process may obtain, based on the host group information in the shared storage server, ranking information corresponding to the local node, for example, information such as the local rank, the global rank, and the world size, and then correspondingly establish the inter-node communication connection based on the determined ranking information, so that the communication connection between the remaining nodes and the newly added node is established.

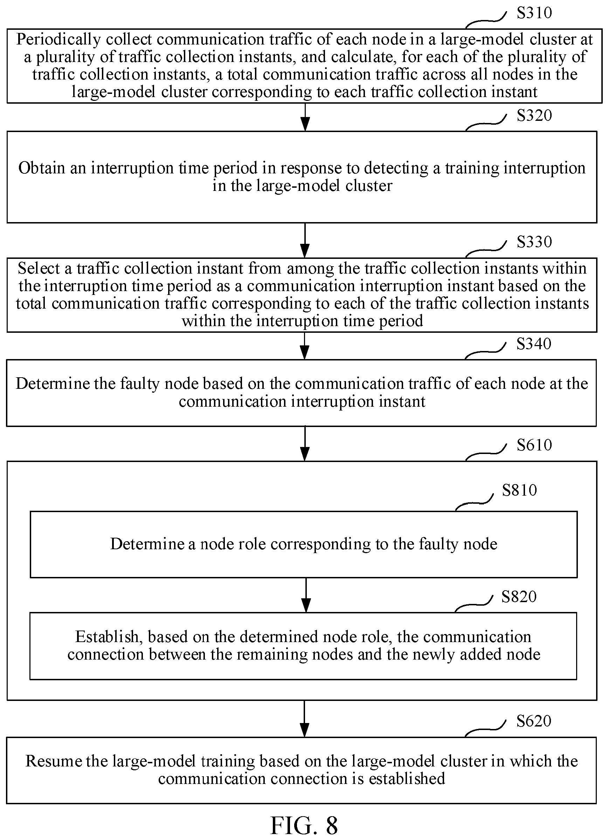

As shown in FIG. 8, the process of establishing the communication connection between the remaining nodes in the large-model cluster and the newly added node may further include the following operations:
S810: Determine a node role corresponding to the faulty node.

S820: Establish, based on the determined node role, the communication connection between the remaining nodes and the newly added node.

The node role includes a leader node or a follower node. As described above, in the large-model cluster, the leader node may be responsible for coordinating a training task in the entire cluster, and the follower node may be responsible for executing the training task allocated by the leader node.

Different node roles correspond to different communication connection policies. Therefore, the node role corresponding to the faulty node is first determined, and then the communication connection between the remaining nodes and the newly added node is established by using a communication connection policy matching the node role.

When the node role of the faulty node is the leader node, because the previous leader node is removed from the large-model cluster, after the newly added node is detected, a leader node and a follower node need to be re-determined from the remaining nodes and the newly added node, to establish a communication connection between the re-determined leader node and follower node.

For example, the leader node may be voted from the remaining nodes and the newly added node by using a voting mechanism, and all nodes other than the re-determined leader node are used as follower nodes. For example, a new leader node may be voted from the remaining nodes and the newly added node by using a heartbeat mechanism or another voting algorithm. Specific content of the voting mechanism is not limited herein.

After the faulty node is removed, it is detected by the remaining nodes that the leader node is unavailable. Therefore, a voting mechanism deployed in the remaining nodes is started, to vote a new leader node from the remaining nodes and the newly added node.

The re-determined leader node takes over management responsibilities in the large-model cluster. For example, the re-determined leader node broadcasts a leader node update message. The leader node update message includes a node address of the re-determined leader node, so that a communication graph is updated based on the node address of the re-determined leader node, and the inter-node communication connection is established based on an updated communication graph.

In the large-model cluster, the communication graph may be established between the leader node and the follower node based on specific logic and a data dependency relationship, to ensure that the training task can be efficiently and correctly executed. For example, a checkpoint file is configured for saving state data of the large-model cluster, for example, a state of execution of the training task, data partition information, and a dependency relationship, to restore a computing state of a node when the training task fails or may be restarted. In this way, a directed graph may be constructed based on the state data in the checkpoint file to represent an inter-node communication relationship. A node in the graph may be a leader node or a follower node, and an edge represents a flow direction of data or control information between nodes. The directed graph is referred to as the communication graph.

When the node role of the faulty node is a follower node, an existing communication connection between the remaining nodes is maintained, and a communication graph of a removed node is restored in the newly added node, so that the newly added node establishes the inter-node communication connection based on the restored communication graph. In this way, the communication connection between the remaining nodes and the newly added node is established.

S620: Resume the large-model training based on the large-model cluster in which the communication connection is established.

As described above, because the checkpoint file saves the state data of the large-model cluster, based on the large-model cluster whose communication connection is established, a training state is restored from the checkpoint file to continue the large-model training.

Through experiments, for an exemplary large-model cluster training scenario, according to the method provided in some embodiments of the present disclosure, time from finding a faulty node to resuming cluster training may be shortened from four hours to within three minutes. This greatly improves efficiency of large-model training, and reduces a waste of computing resources and labor costs caused by an interruption of a large-model training task.

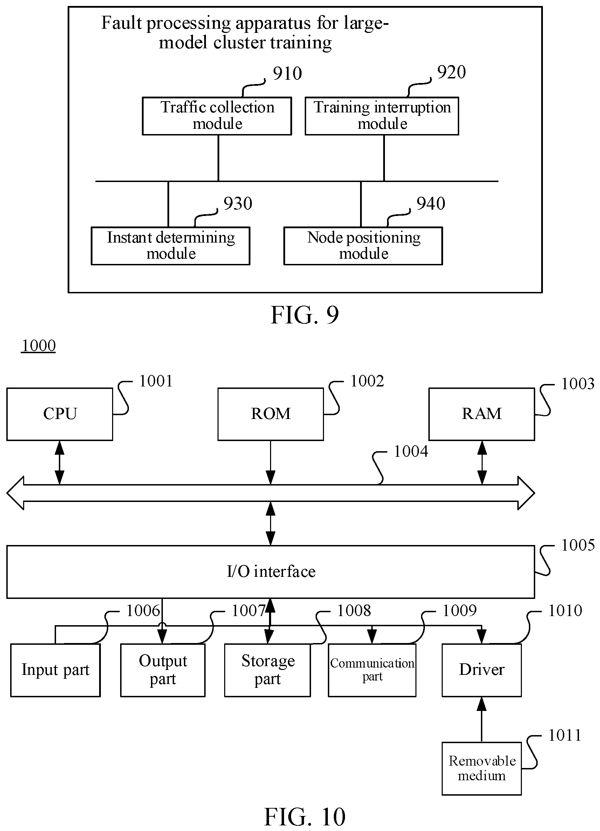

FIG. 9 is a block diagram of a fault processing apparatus for large-model cluster training according to an exemplary embodiment of the present disclosure. As shown in FIG. 9, the apparatus includes:
a traffic collection module 910, configured to periodically collect communication traffic of each node in a large-model cluster, and calculate total communication traffic corresponding to each traffic collection instant;
a training interruption module 920, configured to obtain an interruption time period when it is detected that a training interruption occurs in the large-model cluster;
an instant determining module 930, configured to select a traffic collection instant from traffic collection instants within the interruption time period as a communication interruption instant based on total communication traffic corresponding to each traffic collection instant within the interruption time period; and
a node positioning module 940, configured to determine a faulty node based on communication traffic of each node at the communication interruption instant.

The apparatus provided in the foregoing embodiment and the method provided in the foregoing embodiments belong to the same idea. Specific operation manners of the modules and the units have been described in detail in the method embodiments. Details are not described herein again. In actual application, the fault processing apparatus for large-model cluster training provided in the foregoing embodiment may allocate the foregoing functions to different functional modules according to requirements. That is, an internal structure of the apparatus is divided into different functional modules to complete all or some of the functions described above. This is not limited herein.

Some embodiments of the present disclosure further provide an electronic device, including: one or more processors; and a memory, configured to store one or more computer programs, the one or more computer programs, when executed by the one or more processors, causing the electronic device to implement the fault processing method for large-model cluster training provided in the foregoing embodiments.

FIG. 10 is a schematic structural diagram of a computer system applicable to implement an electronic device according to some embodiments of the present disclosure. The electronic device may be the alarm apparatus 120 in the implementation environment shown in FIG. 1, or may be a terminal or a server in another implementation environment. This is not limited herein. The computer system 1000 of the electronic device shown in FIG. 10 is merely an example, and does not constitute any limitation on functions and use ranges of some embodiments of the present disclosure.

As shown in FIG. 10, the computer system 1000 includes a central processing unit (CPU) 1001, which may perform various suitable actions and processing based on a computer program stored in a read-only memory (ROM) 1002 or a computer program loaded from a storage part 1008 into a random access memory (RAM) 1003, for example, perform the method described in the foregoing embodiments. The RAM 1003 further has various computer programs and data required for system operations stored therein. The CPU 1001, the ROM 1002, and the RAM 1003 are connected to each other through a bus 1004. An input/output (I/O) interface 1005 is further connected to the bus 1004.

The following components are connected to the I/O interface 1005: an input part 1006 including a keyboard, a mouse, and the like; an output part 1007 including a cathode ray tube (CRT), a liquid crystal display (LCD), a speaker, and the like; a storage part 1008 including a hard disk and the like; and a communication part 1009 including a network interface card such as a local area network (LAN) card and a modem. The communication part 1009 performs communication processing through a network, for example, the Internet. A driver 1010 is further connected to the I/O interface 1005 according to requirements. A removable medium 1011, such as a magnetic disk, an optical disc, a magneto-optical disk, and a semiconductor memory, is mounted on the driver 1010 according to requirements, so that a computer program read from the removable medium is installed in the storage part 1008 according to requirements.

Particularly, according to some embodiments of the present disclosure, the processes described in the foregoing with reference to the flowcharts may be implemented as computer software programs. For example, some embodiments of the present disclosure include a computer program product. The computer program product includes a computer program stored in a computer-readable medium. The computer program includes a computer program for performing the method shown in the flowchart. In some embodiments, the computer program may be downloaded and installed from the network and/or installed from the removable medium 1011 through the communication part 1009. When executed by the central processing unit (CPU) 1001, the computer program performs various functions defined in the system of the present disclosure.

The computer-readable medium shown in this embodiment of the present disclosure may be a computer-readable signal medium or a computer-readable storage medium or any combination thereof. A more specific example of the computer-readable storage medium may include but is not limited to: an electrical connection having one or more wires, a portable computer magnetic disk, a hard disk, a random access memory (RAM), a read-only memory (ROM), an erasable programmable read-only memory (EPROM), a flash memory, an optical fiber, a compact disc read-only memory (CD-ROM), an optical storage device, a magnetic storage device, or any appropriate combination thereof. The computer program included in the computer-readable medium may be transmitted by using any suitable medium, including but not limited to: a wireless medium, a wire, or the like, or any appropriate combination thereof.

The flowcharts and the block diagrams in the accompanying drawings illustrate possible system architectures, functions, and operations that may be implemented by a system, a method, and a computer program product according to various embodiments of the present disclosure. Each block in a flowchart or a block diagram may represent a module, a program segment, or a part of code. The module, the program segment, or the part of code includes one or more executable instructions for implementing specified logic functions. In some implementations used as substitutes, functions annotated in boxes may alternatively occur in a sequence different from that annotated in the accompanying drawings. For example, two blocks shown in succession may be actually performed basically in parallel, and sometimes may be performed in a reverse sequence, which is determined by an involved function. Each block in the flowchart or the block diagram and combinations of the blocks in the flowcharts or the block diagrams may be implemented by a dedicated hardware-based system that performs a specified function or operation, or may be implemented by a combination of dedicated hardware and computer instructions.

An involved unit described in some embodiments of the present disclosure may be implemented by software or by hardware, and may alternatively be disposed in a processor. Names of these units do not constitute a limitation on the units in a specific situation.

Some embodiments of the present disclosure further provide a computer-readable storage medium, having a computer program stored therein, the computer program, when executed by a processor of an electronic device, implementing the fault processing method for large-model cluster training described above. The computer-readable storage medium may be included in the electronic device described in the foregoing embodiments, or may exist alone and is not assembled in the electronic device.

Some embodiments of the present disclosure further provide a computer program product, including a computer program, the computer program being stored in a computer-readable storage medium. A processor of an electronic device reads the computer program from the computer-readable storage medium and executes the computer program, causing the electronic device to perform the fault processing method for large-model cluster training provided in the foregoing embodiments.

The foregoing descriptions are merely exemplary embodiments of the present disclosure, and are not intended to limit the implementations of the present disclosure. A person of ordinary skill in the art may conveniently make corresponding variations or modifications according to the main idea and spirit of the present disclosure. Therefore, the protection scope of the present disclosure shall be subject to the protection scope of the claims.

Relevant data such as communication traffic, host group information, and ranking information is involved in a specific implementation of the present disclosure. When some embodiments of the present disclosure are applied to a specific product or technology, a license or consent of a user is required to be obtained, and collection, use, and processing of the relevant data are required to comply with relevant laws and regulations and standards of related countries and regions.

## Claims

1. A fault processing method for large-model cluster training, wherein a large-model cluster includes a plurality of nodes which perform a large-model training task collectively; the method comprising:
periodically collecting communication traffic of each node in the large-model cluster at a plurality of traffic collection instants, and calculating, for each of the plurality of traffic collection instants, a total communication traffic across all nodes in the large-model cluster corresponding to the traffic collection instant;
obtaining an interruption time period in response to detecting a training interruption in the large-model cluster, wherein the interruption time period is a preset duration covering an instant at which the training interruption is detected; and obtaining, from among the plurality of traffic collection instants, candidate traffic collection instants which are within the interruption time period;
selecting, as a communication interruption instant, a traffic collection instant from among the candidate traffic collection instants based on the total communication traffic corresponding to each of the candidate traffic collection instants; and
determining a faulty node based on the communication traffic of each node at the communication interruption instant.

2. The method according to claim 1, wherein the selecting, as the communication interruption instant, the traffic collection instant from among the candidate traffic collection instants based on the total communication traffic corresponding to each of the candidate traffic collection instants comprises:
sorting, in chronological order, the total communication traffic corresponding to each of the candidate traffic collection instants, to obtain a total communication traffic sequence; and
calculating a difference value for each total communication traffic in the total communication traffic sequence, and selecting, as the communication interruption instant, the traffic collection instant from among the candidate traffic collection instants based on the difference value corresponding to each total communication traffic in the total communication traffic sequence.

3. The method according to claim 2, wherein the calculating the difference value for each total communication traffic in the total communication traffic sequence, and selecting, as the communication interruption instant, the traffic collection instant from among the candidate traffic collection instants based on the difference value corresponding to each total communication traffic in the total communication traffic sequence comprises:
calculating a forward difference value for each total communication traffic in the total communication traffic sequence, and constructing a forward difference sequence corresponding to the total communication traffic sequence based on the forward difference value of each total communication traffic; and
determining a smallest forward difference value in the forward difference sequence, and selecting the traffic collection instant corresponding to the smallest forward difference value as the communication interruption instant.

4. The method according to any one of claims 1 to 3, wherein the determining the faulty node based on communication traffic of each node at the communication interruption instant comprises:
determining, based on the communication traffic of each node at the communication interruption instant, a node having the lowest communication traffic; and
designating the determined node as the faulty node.

5. The method according to any one of claims 1 to 4, wherein the communication traffic is remote direct memory access (RDMA) traffic.

6. The method according to any one of claims 1 to 5, further comprising: detecting a traffic view of the large-model training task in the large-model cluster, to determine whether the training interruption occurs in the large-model cluster, the traffic view being configured to present and analyze a communication traffic change of the large-model training task.

7. The method according to any one of claims 1 to 6, further comprising:
after the faulty node is removed from the large-model cluster and in response to detecting a newly added node, establishing a communication connection between remaining nodes in the large-model cluster and the newly added node; and
resuming large-model training based on the large-model cluster in which the communication connection is established.

8. The method according to claim 7, wherein the establishing the communication connection comprises:
restarting networking sub-processes respectively deployed in the remaining nodes and the newly added node; and
performing inter-node networking based on the networking sub-processes, and establishing the communication connection between the remaining nodes and the newly added node.

9. The method according to claim 8, wherein the performing inter-node networking based on the networking sub-processes, and establishing the communication connection between the remaining nodes and the newly added node comprises:
obtaining host group information from a shared storage server, the host group information being configured to record host information of each node currently included in the large-model cluster;
saving host information of a local node to the shared storage server, to update the host group information; and
continuously querying the host group information in the shared storage server, and in response to an amount of host information included in the host group information reaching a preset amount value and the amount not changing within a preset duration, performing networking configuration on the local node and establishing an inter-node communication connection based on the networking configuration.

10. The method according to claim 9, wherein the performing networking configuration on the local node and establishing the inter-node communication connection based on the networking configuration comprises:
determining ranking information corresponding to the local node based on the host group information; and
establishing the inter-node communication connection based on the determined ranking information.

11. The method according to any one of claims 8 to 10, wherein the establishing the communication connection comprises:
determining a node role corresponding to the faulty node, the node role comprising a leader node or a follower node; and
establishing, based on the node role, wherein the communication connection between the remaining nodes and the newly added node.

12. The method according to claim 11, wherein the establishing, based on the node role, the communication connection between the remaining nodes and the newly added node comprises:
re-determining a leader node from the remaining nodes and the newly added node when the node role is the leader node, and using a node other than the re-determined leader node as a follower node; and
establishing a communication connection between the re-determined leader node and the follower node.

13. The method according to claim 12, wherein the establishing the communication connection between the re-determined leader node and the follower node comprises:
broadcasting a leader node update message by the re-determined leader node, the leader node update message comprising a node address of the re-determined leader node; and
re-establishing a communication graph based on the node address of the re-determined leader node, and establishing the inter-node communication connection based on the communication graph.

14. The method according to claim 11, wherein the establishing, based on the node role, the communication connection between the remaining nodes and the newly added node comprises:
maintaining an existing communication connection between the remaining nodes when the node role is the follower node, and restoring a communication graph of a removed node in the newly added node, so that the newly added node establishes the inter-node communication connection based on the restored communication graph.

15. A fault processing apparatus for large-model cluster training, comprising:
a traffic collection module, configured to periodically collect communication traffic of each node in a large-model cluster on a plurality of traffic collecting instants, and calculate, for each of the plurality of traffic collection instants, a total communication traffic across all nodes in the large-model cluster corresponding to the traffic collection instant; wherein the large-model cluster includes a plurality of nodes which perform a large-model training task collectively;
a training interruption module, configured to obtain an interruption time period in response to detecting a training interruption in the large-model cluster, and obtain, from among the plurality of traffic collection instants, candidate traffic collection instants which are within the interruption time period;
an instant determining module, configured to select, as a communication interruption instant, a traffic collection instant from among the candidate traffic collection instants based on the total communication traffic corresponding to each of the candidate traffic collection instants; and
a node positioning module, configured to determine a faulty node based on the communication traffic of each node at the communication interruption instant.

16. An electronic device, comprising:
one or more processors; and
a memory, configured to store one or more computer programs, the one or more computer programs, when executed by the one or more processors, causing the electronic device to implement the method according to any one of claims 1 to 14.

17. A computer-readable storage medium, having a computer program stored therein, the computer program, when executed by a processor of an electronic device, causing the electronic device to implement the method according to any one of claims 1 to 14.

18. A computer program product, comprising a computer program, the computer program, when executed by a processor of an electronic device, implementing the method according to any one of claims 1 to 14.
